# EUROPEAN PATENT APPLICATION

(11) **EP 1 041 109 A2**
(43) Date of publication of application: **04.10.2000**
(21) Application number: 00106719.8
(22) Date of filing: 29.03.2000
(51) Int. Cl.: C08K 5/053, C08L 77/00

(54) **Polyamide compositions having good fluidity**

(30) Priority: 30.03.1999 JP 8981299; 08.02.2000 JP 2000029871
(71) Applicant: Ube Industries, Ltd., Ube-shi, Yamaguchi 755-8633 (JP)
(72) Inventor: Morimoto, Okihiro, c/o Ube Industries, Ltd., Ube-city, Yamaguchi Prefecture 755-8633 (JP); Akagawa, Yoshifumi, c/o Ube Industries, Ltd., Ube-city, Yamaguchi Prefecture 755-8633 (JP); Harada, Hideki, c/o Ube Industries, Ltd., Ube-city, Yamaguchi Prefecture 755-8633 (JP); Ogawa, Tadashi, c/o Ube Industries, Ltd., Ube-city, Yamaguchi Prefecture 755-8633 (JP)
(74) Representative: Grünecker, Kinkeldey, Stockmair & Schwanhäusser Anwaltssozietät

(57) **Abstract**

Disclosed is a polyamide composition comprising 100 parts by weight of a polyamide resin and 0.005 to 5 parts by weight of a polyhydric alcohol having a melting point of 150 to 280°C. The polyamide composition prepared by the present invention does not need a pretreatment step, has both good fluidity and mechanical strength and is used mainly in the DSI or DRI technique which is an injection welding technique.

## Description

### FIELD OF THE INVENTION

The present invention relates to a polyamide composition which is mainly used when the die slide injection (DSI) or die rotary injection (DRI) is employed as an injection welding technique, and especially to a polyamide composition which can prevent scattering, upon molding or forming, of a fluidity improver added to the composition and is equipped with both good fluidity and mechanical strength without impairing mechanical properties, heat resistance, dimensional accuracy, resistance against an oil such as gasoline or engine oil, and chemical resistance inherent to a polyamide resin.

### BACKGROUND OF THE INVENTION

Owing to excellent mechanical properties, polyamide resins have been used for mechanism elements or structural elements in any field. With advance of technology in every industrial field, polyamide resins have been asked to have various improved properties and they have come to be used for a wide variety of applications.

In recent years, injection welding techniques (DSI technique and DRI technique) have attracted attentions as a processing technique. In these techniques, sufficient welding strength is not attained unless a polyamide composition is run in a short time, because a secondary injection part has only a small flow cross-sectional area. Accordingly, the polyamide composition used in these techniques is demanded to have higher fluidity.

As the countermeasure, the polyamide resin popularly employed now is replaced by another polyamide resin having lower viscosity than the base viscosity of the former polyamide resin or a proper additive is used as a fluidity improver. It is however necessary to add a severely selected fluidity improver when a polyamide resin is used in the injection welding technique, since it is a technique for producing a molded product by welding of resins in the injection welding apparatus. If a fluidity improver is not severely selected, the welding strength becomes neither uniform nor stable.

Proposed is the incorporation, as a fluidity improver, of an aliphatic carboxylate ester (JP-A-55-31803) (the term "JP-A" as used herein means an "unexamined published Japanese patent application"), an aliphatic carboxylic acid substance (JP-A-54-103460) or an amide compound (JP-B-49-9618) (the term "JP-B" as used herein means an "examined Japanese patent publication") in a polyamide resin.

These resin compositions are each obtained by the external addition of a fluidity improver to the pellets of a polyamide resin and they do not pose any particular problems in fluidity and mechanical strength. It is however pointed out that they are accompanied with the following problems: prior to the application of the injection welding technique (DSI technique or DRI technique), a fluidity improver must be blended (externally added); and owing that the improver adheres only to the external surfaces of the pellets, it tends to scatter and cause clogging of the filter of the hopper drier connected to an injection molding machine.

### SUMMARY OF THE INVENTION

An object of the present invention is to provide a polyamide composition which is used mainly for injection welding by the DSI technique or DRI technique; and does not require a pre-treatment step, prevents scattering of a fluidity improver added to the composition, and has both good fluidity and mechanical strength.

The present inventor has conducted an extensive investigation with a view to overcoming the above-described problems. As a result, it has been found that the above-described object can be attained by mixing a predetermined polyhydric alcohol with a polyamide resin in advance, leading to the completion of the present invention.

In the present invention, there is thus provided a polyamide composition comprising 100 parts by weight of a polyamide resin and 0.005 to 5 parts by weight of a polyhydric alcohol having a melting point of 150 to 280°C.

In the present invention, the composition having good fluidity specifically shows a composition which can easily be shaped into a large-sized molded product such as intake manifold and engine cover, and further which can assure sufficient welding strength at molding even by the DSI or DRI technique, which technique requires a relatively low injection pressure at molding.

### BRIEF DESCRIPTION OF THE DRAWINGS

FIG. 1 is a front view of one example of a test piece (unit: mm);
FIG. 2 is a side view of one example of a test piece (unit: mm); and
FIG. 3 illustrates the state of the test piece molded by the DRI technique.

### DETAILED DESCRIPTION OF THE INVENTION

The present invention will hereinafter be described more specifically.

Examples of the polyamide resin to be used in the present invention include aliphatic polyamides such as polyamide 6, polyamide 46, polyamide 66, polyamide 610, polyamide 6/12, polyamide 11 and polyamide 12, polyhexadiamine terephthalamide, polyhexadiamine isophthalamide, polytetramethylene isophthalamide and aromatic polyamides available from, for example, metaxylenediamine and adipic acid; and copolymers or mixtures thereof.

Examples of the polyamide resin preferably used in the present invention include polyamide resins having a melting point of 160 to 320°C and specific examples include polyamide 6, polyamide 66, polyamide 6/66, polyamide6/6T, polyamide 66/6T, polyamide 66/6T/6I (wherein T means terephthalic acid, I means isophthalic acid and / means copolymerization).

The polyhydric alcohol used in the present invention is that having a melting point falling within a range of 150 to 280°C, preferably 180 to 260°C. The melting point is an endothermic peak (melting point) as measured by a differential scanning calorimeter (DSC) to be used for the measurement of the melting point or solidifying point of a polymer. Examples of the polyhydric alcohol preferably used in the present invention include pentaerythritol, dipentaerythritol and trimethylolethane. They may be used in combination. Pentaerythritol and/or dipentaerythritol are more preferred. At melting points lower than 150°C scattering tends to occur even during the kneading off it in the polyamide resin, leading to the impairment of the fluidity of the resulting composition. Melting points higher than 280°C, on the other hand, prevent the smooth exhibition of good fluidity improving effects because they exceed the usual molding temperature.

In the present invention, the polyhydric alcohol is used in an amount of 0.005 to 5 parts by weight, preferably 0.05 to 3 parts by weight based on 100 parts by weight of the polyamide resin. When the using amount is less than 0.005 part by weight, the fluidity upon molding is insufficient. Amounts exceeding 5 parts by weight, on the other hand, do not pose any problem in fluidity but tend to lower the mechanical strength of the molded product.

Although no limitation is imposed on the mixing method of the polyhydric alcohol and polyamide resin, the polyhydric alcohol is usually kneaded in the polyamide resin.

There is no limitation imposed on the mixing apparatus and a single screw kneader or a twin screw kneader can be used without any problem.

In order to heighten the mechanical strength of the polyamide resin of the present invention it is preferable to add a fibrous filler to the polyamide resin. Examples of the fibrous filler include glass fibers, carbon fibers and wollastonite, and fibrous inorganic materials such as potassium titanate whisker. Among them, glass fibers are preferred, with those having an average fiber diameter of about 6 to 15 µm being most preferred.

The fibrous filler is preferably added in an amount not greater than 200 parts by weight, more preferably not greater than 100 parts by weight, most preferably 5 to 50 parts by weight, based on 100 parts by weight of the polyamide resin. Amounts exceeding 200 parts by weight deteriorate not only the mechanical strength but also the surface conditions and are therefore not preferred.

Although there is no particular limitation imposed on the adding method of the inorganic filler, it may be added to the polyamide resin, simultaneously with the polyhydric alcohol.

It is also possible to add, to the composition of the present invention, a function imparting agent such as heat resistant imparting agent, weather resistance imparting agent, crystallization promoter, release agent, antistatic agent, flame retardant, flame-retarding assistant such as antimony trioxide and/or color pigment within an extent not impairing the object of the present invention.

The function imparting agent is preferably added in an amount of 0.1 to 10 parts by weight, more preferably 0.5 to 5 parts by weight, and most preferably 1 to 4 parts by weight, based on 100 parts by weight of the polyamide resin.

The polyamide composition available by the present invention is most suited as an injection welding material. Examples of the welded product of it include automotive parts manufactured by the DSI or DRI technique, household electric appliances and connectors for electronic apparatuses. Specific examples include mechanism elements such as intake manifold, air duct, resonator chamber, oil strainer, power steering tank, brake fluid subtank, relay box, ecofilter, locker cover and sensor and modular components formed thereof.

In the present invention, a polyamide composition which does not need a pretreatment step for the external addition of a fluidity improver, can prevent the scattering of the fluidity improver and has both good fluidity and mechanical strength can be obtained by incorporating, in a polyamide resin, a polyhydric alcohol having a melting point of 150 to 280°C. The polyamide composition available by the present invention is most suited as an injection welding material and examples of the molded product include automotive parts manufactured by the DSI or DRI technique, household electric appliances and connectors for an electronic apparatus.

The present invention will hereinafter be described in further detail by Examples. Concerning each evaluation, measurement was carried out in accordance with the below-described manner.

### Melting point:

The melting point of the fluidity improver used in each of Examples and Comparative Examples of the present invention was measured by a differential scanning calorimeter ("DSC210", trade name; manufactured by Seiko Instruments, Inc.).

### Fluidity:

The composition obtained according to the present invention was molded into a test piece under the following conditions and the flow length of the test piece was measured.
Test piece: 1.0 t × 12.5 ww bar flow
(gate size: 1.0t × 3.0w × 2.0L) (unit: mm)

### Injection molding machine ("Sumitomo Nestar SG-75 SYCAPMII")

Resin temperature set at: 290°C
   (NH285, 290, 290, 290, 290, 270°C)
Mold temperature set at: 80°C
Dwell: 50 MPa or 100MPa
Holding time: 5 sec.
Cooling time: 15 sec.

The term "flow length" as used herein means a distance of the product molded under the above-described conditions (particularly, at dwell of 50 MPa or 100 MPa) from the gate to the end of the flow completely recognized as a molded product.

After the molding conditions became stable, the fluidity was evaluated by the average of the flow length of 10 molded products.

### Injection welding strength:

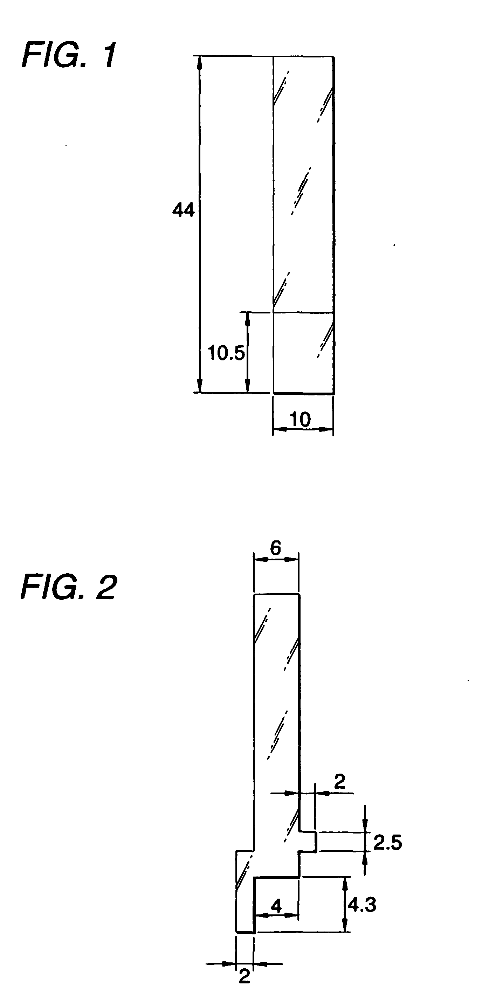

The tensile strength of a test piece, which had been obtained by molding the composition of the present invention into the shape as shown in FIGS. 1 to 3 by the DRI technique, was measured.

### Molding conditions:

Molding machine: "N140BII", manufactured by JSW, Ltd.
Resin temperature: 300°C
Mold temperature: 75°C
Dwell: 20 MPa
Injection time: 1 sec.
Cooling time: 20 sec.

### Stretching conditions:

Tensile tester: "TENSILON UTM-I-2500", trade name; manufactured by Orientec.
Stress rate: 5 mm/min
Distance between chucks: 25 mm

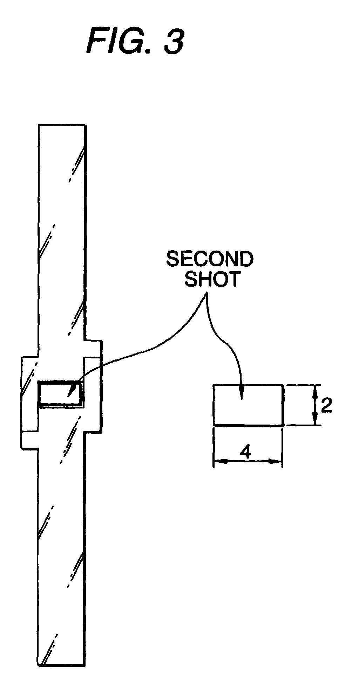

Ten test pieces of FIG. 3 molded under the above-described molding conditions were each stretched by a tensile tester and tensile strength of the adhered portion at break was measured. The injection welding strength was evaluated by the average of 10 test pieces.

### EXAMPLE 1

A target polyamide composition was prepared by kneading, in 100 parts by weight of a polyamide 6 resin ("UBE Nylon 6 1015B", grade name), 3 parts by weight of a black pigment master, 0.5 part by weight of pentaerythritol having a melting point of 260°C as a polyhydric alcohol, and 45 parts by weight of glass fibers by a twin screw kneader ("TEX-44") having a diameter of 44 mm. The fluidity of the resulting polyamide composition and tensile strength of the test piece molded by the DRI technique were measured and injection welding strength was determined. The results are shown in Table 1.

The polyamide resin thus obtained permitted continuous molding without causing clogging of the filter of the hopper drier of the injection molding machine employed.

### EXAMPLES 2 TO 5

In each of Examples 2 to 5, in a similar manner to Example 1 except that the amount of pentaerythritol used as a polyhydric alcohol was changed as shown in Table 1, a polyamide composition was prepared and its physical properties were measured. The results are shown in Table 1.

### EXAMPLE 6

In a similar manner to Example 1 except that dipentaerythritol having a melting point of 182°C was used as a polyhydric alcohol in an amount of 0.5 part by weight, a polyamide composition was prepared and its physical properties were measured. The results are shown in Table 1.

### EXAMPLE 7

In a similar manner to Example 1 except that a 80:20 (wt.% ratio) mixture of pentaerythritol and dipentaerythritol was used as a polyhydric alcohol in an amount of 1.5 parts by weighty a polyamide composition was prepared and its physical properties were measured. The results are shown in Table 1.

### EXAMPLES 8 AND 9

In each of Examples 8 and 9, in a similar manner to Example 1 except that the amount of the glass fibers was changed as shown in Table 1, a polyamide composition was prepared and its physical properties were measured. The results are shown in Table 1.

The polyamide compositions obtained in the above examples also permitted continuous moulding without causing clogging of the filter of the hopper drier of an injection molding machine.

**Table 1**

| Compounds used | | Ex.1 | Ex.2 | Ex.3 | Ex.4 | Ex.5 | Ex.6 | Ex.7 | Ex.8 | Ex.9 |
|---|---|---|---|---|---|---|---|---|---|---|
| Polyamide 6 resin (parts by weight) | | 100 | 100 | 100 | 100 | 100 | 100 | 100 | 100 | 100 |
| Glass fibers (parts by weight) | | 45 | 45 | 45 | 45 | 45 | 45 | 45 | 10 | 100 |
| Black pigment master (parts by weight) | | 3 | 3 | 3 | 3 | 3 | 3 | 3 | 3 | 3 |
| Polyhydric alcohol (parts by weight) | | P* | P* | P* | P* | P* | D** | M*** | P* | P* |
| | | 0.5 | 0.05 | 1.5 | 3 | 5 | 0.5 | 1.5 | 0.5 | 0.5 |
| Fluidity (mm) | 50MPa | 75 | 67 | 106 | 123 | 136 | 75 | 105 | 112 | 49 |
| | 100MPa | 135 | 124 | 179 | 205 | 239 | 135 | 175 | 191 | 96 |
| Injection welding strength (kg) | | 390 | 397 | 387 | 372 | 340 | 389 | 388 | 336 | 362 |

| | | | | | | | | | | |
|---|---|---|---|---|---|---|---|---|---|---|
| P* : pentaerythritol | | | | | | | | | | |
| D** : dipentaerythritol | | | | | | | | | | |
| M*** : mixture of polyhydric alcohols, more specifically, 80 wt.% of pentaerythritol and 20 wt.% of dipentaerythritol. | | | | | | | | | | |

### COMPARATIVE EXAMPLE 1

A polyamide composition was prepared by kneading, in 100 parts by weight of a polyamide 6 resin ("UBE Nylon 6 1015B", grade name), 3 parts by weight of a black pigment master and 45 parts by weight of glass fibers by a twin screw kneader ("TEX-44") having a diameter of 44 mm. The fluidity and injection welding strength of the resulting polyamide composition were measured and results are shown in Table 2.

### COMPARATIVE EXAMPLE 2

In a similar manner to Example 1 except for the use of 1,6-hexanediol having a melting point of 43°C as a polyhydric alcohol, a polyamide composition was prepared and its physical properties were measured. The results are shown in Table 2.

### COMPARATIVE EXAMPLE 3

In a similar manner to Example 1 except that 0.5 part by weight of pentaerythritol monostearate having a melting point of 52°C was used as an ester compound of a polyhydric alcohol instead of the polyhydric alcohol, a polyamide composition was prepared and its physical properties were measured. The results are shown in Table 2.

### COMPARATIVE EXAMPLE 4

In a similar manner to Example 1 except that 1.5 parts by weight of pentaerythritol monostearate having a melting point of 52°C was used as an ester compound of a polyhydric alcohol instead of the polyhydric alcohol, a polyamide composition was prepared and its physical properties were measured. The results are shown in Table 2.

### COMPARATIVE EXMAPLE 5

In a similar manner to Example 1 except that 1.5 parts by weight of dipentaerythritol adipate was used as an ester compound of a polyhydric alcohol instead of the polyhydric alcohol, a polyamide composition was prepared and its physical properties were measured. The results are shown in Table 2.

### COMPARATIVE EXAMPLE 6

In a similar manner to Example 1 except for the use of 7 parts by weight of pentaerythritol as the polyhydric alcohol, a polyamide composition was prepared and its physical properties were measured. The results are shown in Table 2.

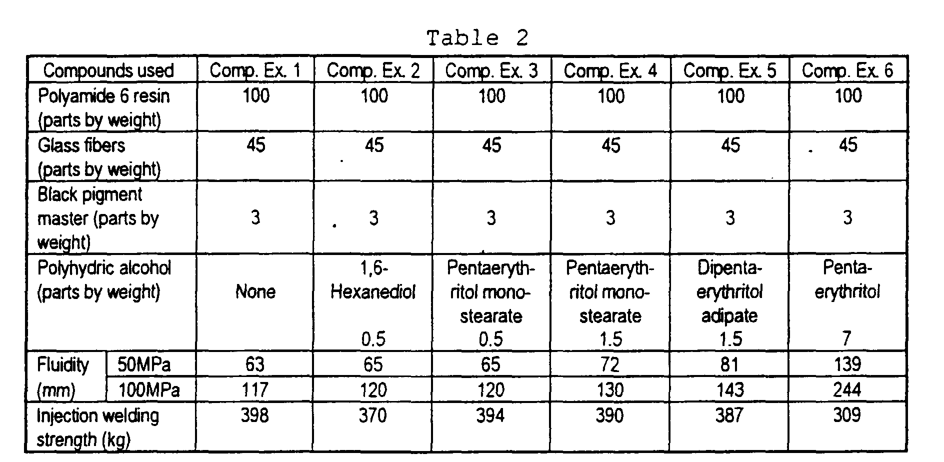

While the invention has been described in detail and with reference to specific embodiments thereof, it will be apparent to one skilled in the art that various changes and modifications can be made therein without departing from the spirit and scope thereof.

## Claims

1. A polyamide composition comprising 100 parts by weight of a polyamide resin and 0.005 to 5 parts by weight of a polyhydric alcohol having a melting point of 150 to 280°C.

2. The polyamide composition according to claim 1, wherein said polyamide resin is a polyamide resin having a melting point of 160 to 320°C.

3. The polyamide composition according to claim 1, wherein said polyhydric alcohol is pentaerythritol and/or dipentaerythritol.

4. The polyamide composition according to claim 1, wherein the amount of said polyhydric alcohol is in an amount of 0.05 to 3 parts by weight based on 100 parts by weight of the polyamide resin.

5. The polyamide composition according to claim 1, further comprising a fibrous filler.

6. The polyamide composition according to claim 5, wherein said fibrous filler is a glass fiber.

7. The polyamide composition according to claim 5, wherein the amount of said fibrous filler is in an amount of not greater than 200 parts by weight based on 100 parts by weight of the polyamide resin.

8. The polyamide composition according to claim 5, wherein the amount of said fibrous filler is in an amount of not greater than 100 parts by weight based on 100 parts by weight of the polyamide resin.

9. The polyamide composition according to claim 5, wherein the amount of said fibrous filler is in an amount of 5 to 50 parts by weight based on 100 parts by weight of the polyamide resin.

10. The polyamide composition according to claim 1, further comprising a color pigment.

11. An injection welding material comprising a polyamide composition comprising 100 parts by weight of a polyamide resin and 0.005 to 5 parts by weight of a polyhydric alcohol having a melting point of 150 to 280°C.
